Europäisches Patentamt

(19) European Patent Office

Office européen des brevets

(11) Numéro de publication: **0 132 827 B1**

(12) **FASCICULE DE BREVET EUROPEEN**

(45) Date de publication du fascicule du brevet: **19.11.87**

(51) Int. Cl.⁴: **G 02 B 6/44**, H 01 B 7/28

(21) Numéro de dépôt: **84108702.6**

(22) Date de dépôt: **24.07.84**

(54) Procédé de fabrication d'un élément de cable optique, ainsi que dispositif de mise en oeuvre de ce procédé.

(30) Priorité: **27.07.83 FR 8312409**

(43) Date de publication de la demande:
**13.02.85 Bulletin 85/7**

(45) Mention de la délivrance du brevet:
**19.11.87 Bulletin 87/47**

(84) Etats contractants désignés:
**BE CH DE FR GB IT LI NL SE**

(56) Documents cités:
**EP - A - 0 034 286**
**EP - A - 0 058 594**
**DE - A - 3 225 228**
**FR - A - 1 128 721**
**GB - A - 1 354 788**
**GB - A - 2 082 790**
**US - A - 3 972 304**

(73) Titulaire: **LES CABLES DE LYON Société anonyme dite:,**
**170 quai de Clichy, F-92111 Clichy Cedex (FR)**

(72) Inventeur: **Canivet, Jean-Luc, L'Etoile, F-62215 Oye Plage (FR)**

(74) Mandataire: **Weinmiller, Jürgen et al,**
**Lennéstrasse 9 Postfach 24, D-8133 Feldafing (DE)**

ACTORUM AG

## Description

La présente invention concerne un procédé de fabrication d'un élément de câble optique du type comprenant, respectivement, un jonc central dans la surface externe duquel sont ménagées des rainures hélicoïdales, des fibres optiques logées dans lesdites rainures, un produit de remplissage visqueux garnissant le volume des rainures non occupé par lesdites fibres optiques, et une enveloppe de protection recouvrant ledit jonc rainuré ainsi muni de fibres optiques et de produit de remplissage, procédé dans lequel ledit produit de remplissage visqueux est injecté dans les rainures postérieurement à la pose des fibres optiques dans ces dernières. La présente invention concerne également un dispositif de mise en œuvre d'un tel procédé.

Le document GB-A-2 082 790 décrit un procédé de fabrication d'un élément de câble optique comprenant un jonc central à rainures hélicoïdales receptrices de fibres optiques, et dont l'enveloppe externe de protection est constituée par un tube de matière plastique, selon lequel on dépose les fibres optiques dans les rainures du jonc, on injecte dans ces rainures un produit de remplissage visqueux, puis on fait passer le jonc dans une extrudeuse qui l'entoure de l'enveloppe de protection. Un tel procédé n'évite pas un refoulement de produit visqueux vers l'amont de son point d'introduction, et par suite un recul et un bourrage des fibres qui risque d'entraîner leur détérioration lors du passage du jonc dans l'extrudeuse.

Le document GB-A-1 354 788 décrit un procédé de fabrication d'un câble à conducteurs électriques torsadés, selon lequel on injecte autour des conducteurs torsadés un produit hydrophobe, dont on laisse échapper l'excès en amont du point d'injection, puis on refroidit le câble entouré du produit hydrophobe pour solidifier la surface de ce dernier, et on dispose une enveloppe rubanée ou extrudée autour du câble rendu hydrophobe. Un tel procédé n'est pas transposable à la fabrication des câbles à fibres optiques, beaucoup plus fragiles que des conducteurs métalliques.

Le document EP-A-58 594 décrit l'insertion de fibres optiques dans les rainures hélicoïdales d'un jonc à l'aide de filières, puis la pose d'enveloppes de protection rubanées autour du jonc muni des fibres optiques, sans introduction préalable d'un matériau visqueux.

La présente invention a pour but de procurer un procédé de fabrication d'un élément de câble à fibres optiques qui assure à une vitesse élevée un remplissage complet des rainures du jonc en produit visqueux alors que les fibres optiques sont éloignées du fond de ces rainures, et présentent donc le mou requis, tout en évitant un refoulement du produit visqueux vers l'amont du joint d'introduction de ce dernier, ce qui aurait pour conséquence un recul et un bourrage des fibres entraînant leur détérioration.

Le procédé selon l'invention est caractérisé en ce que l'on entoure, préalablement à l'injection de produit visqueux, le jonc muni de ses fibres optiques d'un premier ruban spiralé avec déjoint, en ce que l'injection de produit visqueux est ensuite réalisée en faisant passer le jonc ainsi entouré du premier ruban spiralé avec déjoint dans un alésage calibré de diamètre légèrement supérieur au sien, dans lequel on injecte le produit de remplissage visqueux, sous une pression telle, rapportée à la vitesse de défilement du jonc, que le produit de remplissage vienne à travers les intervalles formés par le déjoint du ruban remplir complètement le volume des rainures non occupé par les fibres optiques, mais sans être refoulé vers l'amont du point d'injection, et en ce que l'on entoure ensuite le jonc ainsi garni de produit visqueux d'un second ruban spiralé venant recouvrir le déjoint du premier ruban, formant ainsi l'enveloppe de protection.

De préférence, l'on entoure le jonc par le premier ruban spiralé avec un déjoint tel que les fibres optiques ne puissent pas former des boucles à l'extérieur du cylindre enveloppe de ce ruban.

On injecte avantageusement dans l'alésage calibré un léger excès de matériau de remplissage visqueux par rapport à la quantité nécessaire pour remplir les rainures, et on le laisse s'échapper latéralement en aval du point d'injection, avant la sortie du jonc de l'alésage calibré.

Le dispositif de mise en œuvre du procédé de l'invention est caractérisé en ce qu'il comprend un premier organe d'enroulement autour du jonc muni de ses fibres optiques d'un premier ruban avec déjoint, un corps d'injection disposé en aval du premier organe d'enroulement, ce corps d'injection étant muni d'un alésage calibré de diamètre légèrement supérieur à celui du jonc, d'un orifice d'injection du produit visqueux et d'une buse ajustable de réglage de la vitesse d'injection de ce produit, et en aval du corps d'injection un second organe d'enroulement autour du premier ruban d'un second ruban venant recouvrir le déjoint du premier.

De préférence, le corps d'injection comporte un orifice de sortie du jonc muni d'un joint d'étanchéité, et un peu en amont de celui-ci, un orifice de fuite pour l'excès de produit visqueux.

Il es décrit ci-après, à titre d'exemple et en référence aux figures du dessin annexé, un câble sous-marin à fibres optiques et un boîtier d'injection de produit visqueux hydrophobe dans les rainures du jonc de ce câble.

La figure 1 représente en coupe le câble à fibres optiques.

La figure 2 représente en coupe diamétrale le boîtier d'injection et le jonc qui le traverse.

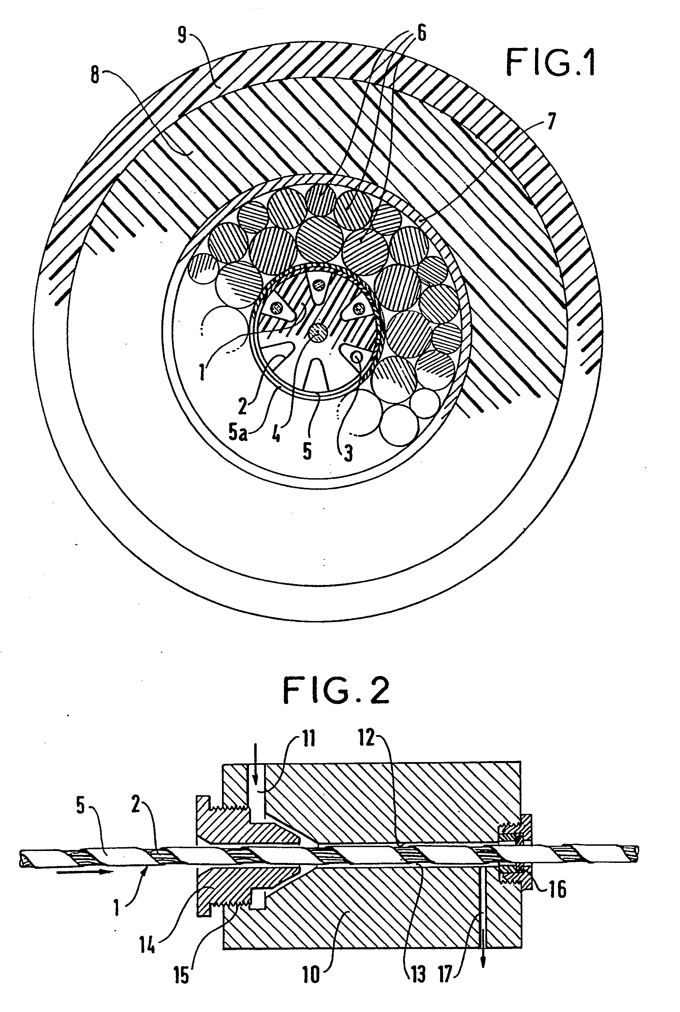

Dans la figure 1, le câble comporte un jonc 1 en matière plastique, muni de six rainures hélicoïdales 2 dans chacune desquelles est disposée une fibre optique 3, et remplie chacune d'un produit visqueux hydrophobe, tel qu'un gel de silice. Le jonc est muni d'un élément porteur axial 4. Le pourtour du jonc est entouré de deux couches successives 5, 5A, d'un ruban de polytéréphtalate d'éthylène glycol. Autour de ce ruban est disposée une armure de protection contre l'écrasement,

2

constituée de fils d'acier tels que 6, de diamètres différents, assemblés en voûte. Les fils d'acier sont enserrés dans une gaine en cuivre 7 rétreinte sur eux. Cette dernière est entourée d'un diélectrique 8 en poyéthylène à basse densité, lui-même protégé par une gaine externe 9 en polyéthylène à haute densité.

Dans la figure 2, le jonc 1 muni de ses rainures 2 contenant les fibres optiques 3 est entouré d'un premier ruban 5, enroulé autour de lui avec un déjoint de 5 à 10 mm. Le boîtier d'injection 10 de produit visqueux hydrofuge comporte un orifice 11 d'introduction de ce produit sous une pression contrôlée, exercée par une pompe, non représentée, et un alésage central 12, de diamètre supérieur à celui du jonc de quelques dizièmes de mm, laissant un jeu annulaire 13. Une buse 14, disposée du côté de l'arrivée du jonc, est munie d'un filetage de réglage 15, qui coopère avec un taraudage de l'extrémité du boîtier pour régler son enfoncement et de ce fait le débit de produit visqueux parvenant au contact du jonc. Du côté de l'orifice de sortie, un joint d'étanchéité 16, calibré au diamètre du jonc, empêche l'excès de matériau visqueux présent dans l'alésage 12 de recouvrir la surface du joint au-delà du plan de sortie, et un orifice de fuite 17 permet de récupérer cet excès de produit visqueux. La vitesse d'avance du jonc dans l'opération peut aller de quelques mètres par minute à 20 ou 30 mètres/minute.

**Revendication**

1. Procédé de fabrication d'un élément de câble optique du type comprenant respectivement un jonc central (1) dans la surface externe duquel sont ménagées des rainures hélicoïdales (2), des fibres optiques (3) logées dans lesdites rainures, un produit de remplissage visqueux garnissant le volume des rainures non occupé par lesdites fibres optiques, et une enveloppe de protection (5, 5a) recouvrant ledit jonc rainuré ainsi muni de fibres optiques et de produit de remplissage, procédé dans lequel ledit produit de remplissage visqueux est injecté dans les rainures postérieurement à la pose des fibres optiques dans ces dernières, ledit procédé étant caractérisé en ce que l'on entoure, préalablement à ladite injection de produit visqueux, ledit jonc muni de ses fibres optiques d'un premier ruban spiralé avec déjoint (5), en ce que ladite injection de produit visqueux est ensuite réalisée en faisant passer ledit jonc ainsi entouré dudit premier ruban spiralé avec déjoint dans un alésage calibré (12) de diamètre légèrement supérieur au sien, dans lequel on injecte (11) le produit de remplissage visqueux sous une pression telle, rapportée à la vitesse de défilement du jonc, que le produit de remplissage vienne à travers les intervalles formés par le déjoint du ruban (4) remplir complètement le volume des rainures (2) non occupé par les fibres optiques, mais sans être refoulé vers l'amont du point d'injection, et en ce que l'on entoure ensuite le jonc ainsi garni de produit visqueux d'un second ruban spiralé (5a) venant recouvrir le déjoint du premier ruban (5), formant ainsi ladite enveloppe de protection (5, 5a).

2. Procédé selon la revendication 1, caractérisé en ce que l'on entoure le jonc (1) par le premier ruban spiralé (5) avec un déjoint tel que les fibres optiques (3) ne puissent pas former des boucles à l'extérieur du cylindre enveloppe de ce ruban.

3. Procédé selon les revendications 1 ou 2, caractérisé en ce que l'on injecte dans l'alésage calibré (12) un léger excès de matériau de remplissage visqueux par rapport à la quantité nécessaire pour remplir les rainures, et on le laisse s'échapper latéralement (17) en aval du point d'injection, avant la sortie du jonc de l'alésage calibré.

4. Dispositif de mise en œuvre du procédé selon la revendication 1, caractérisé en ce qu'il comprend un premier organe d'enroulement autour du jonc (1) muni de ses fibres optiques (3) d'un premier ruban avec déjoint (5), un corps d'injection (10) disposé en aval dudit premier organe d'enroulement, ledit corps d'injection (10) étant muni d'un alésage calibré (12) de diamètre légèrement supérieur à celui du jonc, d'un orifice (11) d'injection du produit visqueux et d'une buse ajustable (14) de réglage de la vitesse d'injection de ce produit, et en aval dudit corps d'injection (10), un second organe d'enroulement autour du premier ruban (5) d'un second ruban (5a) venant recouvrir le déjoint du premier.

5. Dispositif selon la revendication 4, caractérisé en ce que le corps d'injection (10) comporte un orifice de sortie du jonc muni d'un joint d'étanchéité (16), et un peu en amont de celui-ci, un orifice de fuite (17) pour l'excès de produit visqueux.

**Patentansprüche**

1. Verfahren zur Herstellung eines optischen Kabelelements von der Art, das einen zentralen Stab (1), in dessen äusserer Oberfläche spiralförmige Nuten (2) angebracht sind, Lichtleitfasern (3), die in diesen Nuten untergebracht sind, ein viskoses Füllmaterial, das dasjenige Volumen der Nuten ausfüllt, welches nicht von den Lichtleitfasern beansprucht wird, und eine Schutzhülle (5, 5a) aufweist, die den so mit Lichtleitfasern und Füllmaterial versehenen genuteten Stab umgibt, wobei das viskose Füllmaterial nach dem Einbringen der Lichtleitfasern in die Nuten in die letzteren eingespritzt wird, dadurch gekennzeichnet, dass man vor dem Einspritzen des viskosen Materials den mit seinen Lichtleitfasern versehenen Stab mit einem ersten mit Abständen gewickelten Band (5) umgibt, dass das Einspritzen des viskosen Materials dann dadurch erreicht wird, dass man den so von dem ersten mit Abständen gewickelten Band umgebenen Stab durch eine kalibrierte Bohrung (12) führt, deren Durchmesser geringfügig grösser ist als der des Stabs, in welche man das viskose Füllmaterial in bezug auf die Durchgangsgeschwindigkeit des Rohrs unter einem solchen Druck einspritzt (11), dass das Füllmaterial durch die von den Abständen zwischen den Windungen des Bands (4) gebildeten Zwischenräume das nicht von den Lichtleitfasern ausgefüllte Volumen der Nuten völlig füllt, aber ohne stromaufwärts in bezug auf den Einspritzpunkt zurückgedrängt zu werden, und dass man dann den so mit Füllmaterial versehenen Stab mit einem zweiten Band (5a) spiralförmig umgibt, das die Windungsabstände des ersten Bands (5) bedeckt, so dass die Schutzhülle (5, 5a) gebildet wird.

2. Verfahren nach Anspruch 1, dadurch gekennzeichnet, dass man den Stab (1) mit dem ersten Spiralband (5) mit einer solchen Windungssteigung umgibt, dass die Lichtleitfasern (3) ausserhalb des Hüllzylinders dieses Bandes keine Schlingen bilden können.

3. Verfahren nach den Ansprüchen 1 oder 2, dadurch gekennzeichnet, dass man in die kalibrierte Bohrung (12) einen leichten Überschuss an viskosem Füllmaterial in bezug auf die für die Füllung der Nuten notwendigen Menge einspritzt und dass man diesen Überschuss seitlich (17) hinter dem Einspritzpunkt, und zwar vor dem Austritt des Stabs aus der kalibrierten Bohrung austreten lässt.

4. Vorrichtung zur Anwendung des Verfahrens nach Anspruch 1, dadurch gekennzeichnet, dass sie ein erstes Organ zum Aufwickeln eines ersten Bands mit Abstand zwischen den Windungen (5) auf den mit seinen Lichtleitfasern (3) versehenen Stab (1), einen hinter dem ersten Aufwickelorgan angeordneten Einspritzkörper (10), der mit einer kalibrierten Bohrung (12), deren Durchmesser etwas grösser ist als der des Stabs, mit einer Einspritzöffnung (11) für das viskose Material und mit einer einstellbaren Düse (14) zur Geschwindigkeitssteuerung der Einspritzung dieses Produkts versehen ist, und hinter dem Einspritzkörper (10) ein zweites Organ zum Aufwickeln eines zweiten Bands (5a) auf das erste Band (5) aufweist, wobei das zweite Band die Abstände zwischen den Windungen des ersten Bands überdeckt.

5. Vorrichtung nach Anspruch 4, dadurch gekennzeichnet, dass der Einspritzkörper (10) eine Ausgangsöffnung für den Stab, die mit einer Dichtung (16) versehen ist und kurz vor dieser eine Lecköffnung (17) für den Überschuss an viskosem Material aufweist.

## Claims

1. A method for manufacturing an optical cable element of the type comprising respectively a central core (1) with spiral grooves (2) in its outer surface, optical fibers (3) located in said grooves, a viscous filler material filling the volume of the grooves not occupied by said optical fibers, and a protective sheath (5, 5a) covering said grooved core thus supplied with optical fibers and filler material, method in which said viscous filler material is injected into the grooves after having mounted the optical fibers in the grooves, characterized in that prior to said injection of viscous material, said core supplied with its optical fibers is surrounded by a first tape (5) spiralled with gaps, that said injection of viscous material is then realised by making said core thus surrounded by said first tape spiralled with gaps pass through a calibrated bore (12) of a diameter which is slightly greater than that of the core, into which the viscous filler material is injected under such a pressure with respect to the progress speed of the core, that through the intervals formed by the gaps of the tape (4), the filler material completely fills the volume of the grooves (2) not occupied by the optical fibers, but without being pressed back upstream of the injection point, and that the core thus supplied with viscous material is surrounded by a second spiralled tape (5a) covering the gaps of the first tape (5), thus forming the protective sheath (5, 5a).

2. A method according to claim 1, characterized in that the core (1) is surrounded by the first spiralled tape (5) with a gaps such that the optical fibers (3) cannot form loops outside of the cylinder envelope constituted by this tape.

3. A method according to claims 1 and 2, characterized in that a slight excess of viscous filler material with respect to the quantity needed for filling the grooves is injected into the calibrated bor (12), excess which escapes laterally (17) downstream of the injection point before the outlet of the core from the calibrated bore.

4. A device for applying the method according to claim 1, characterized in that it comprises a first means for winding a first tape with gap (5) around the core (1) supplied with its optical fibers (3), an injection body (10) disposed downstream of said first winding means, said injection body (10) being supplied with a calibrated bore (12) of a diameter which is slightly greater than that of the core, an opening (11) for injecting the viscous material and an adjustable nozzle (14) for controlling the injection speed of this material, and downstream of said injection body (10) a second means for winding a second tape (5a) around the first tape (5), this second tape covering the gaps between the windings of the first tape.

5. A device according to claim 4, characterized in that the injection body (10) comprises an outlet opening for the core supplied with a seal (16), and slightly upstream therefrom, a leakage opening (17) for the excess of viscous material.

FIG.1

FIG.2